(19) Europäisches Patentamt
European Patent Office
Office européen des brevets

(11) Veröffentlichungsnummer: **0 238 930**
**B1**

# (12) EUROPÄISCHE PATENTSCHRIFT

(45) Veröffentlichungstag der Patentschrift: **18.10.89**

(51) Int. Cl.⁴: **C 08 G 12/32**, C 08 G 12/40, C 04 B 24/22

(21) Anmeldenummer: **87103386.6**

(22) Anmeldetag: **10.03.87**

(54) **Neue Sulfonsäuregruppen enthaltende Melamin-Formaldehyd-Kondensationsprodukte, Verfahren zu ihrer Herstellung und deren Verwendung.**

(30) Priorität: **22.03.86 DE 3609802**

(43) Veröffentlichungstag der Anmeldung: **30.09.87 Patentblatt 87/40**

(45) Bekanntmachung des Hinweises auf die Patenterteilung: **18.10.89 Patentblatt 89/42**

(84) Benannte Vertragsstaaten: **AT BE CH DE FR LI LU NL**

(56) Entgegenhaltungen:
**AT-B- 315 494**
**DE-A- 3 248 586**
**DE-B- 1 131 403**

(73) Patentinhaber: **BAYER AG, D-5090 Leverkusen 1 Bayerwerk (DE)**

(72) Erfinder: **Reizlein, Karl, Dr., Morgengraben 6, D-5000 Köln 80 (DE)**
Erfinder: **Dobbers, Jürgen, Dr., Carl-Rumpff-Strasse 51, D-5090 Leverkusen1 (DE)**
Erfinder: **Friemann, Hans, Dr., Cohnenhofstrasse 19c, D-5000 Köln 71 (DE)**
Erfinder: **Boehmke, Günther, Dr., Kurt-Schumacher-Ring 152, D-5090 Leverkusen 1 (DE)**

**EP 0 238 930 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft Sulfonsäuregruppen enthaltende durch Reaktion von Melamin, Formaldehyd und Alkalisulfit erhaltene Melamin-Formaldehyd-Kondensationsprodukte, Verfahren zu ihrer Herstellung sowie deren Verwendung als Zusatz für anorganische Baustoffe.

Es ist bereits bekannt geworden, daß man sulfonierte Melamin-Formaldehyd-Kondensate als Zusatz für anorganische Baustoffe verwenden kann (DE-C 1 671 017). Danach, in einem zweistufigen Verfahren durch Kondensation der Ausgangssubstanzen im alkalischen und anschließend im sauren Medium hergestellte Lösungen haben im allgemeinen nur eine Konzentration von ca. 20%.

In der Folgezeit wurden Verfahren für die Herstellung höherkonzentrierter wäßriger Lösungen angegeben, wobei das Molverhältnis Melamin:Formaldehyd:Alkalisulfit 1:2-3:1 war (DE-C 2 359 291 und US-A 4 444 945). Bei einem anderen, in den US-Patentschriften 4 430 469 und 4 501 839 vorgeschlagenen Verfahren zur Herstellung von hochkonzentrierten und niederviskosen wäßrigen Lösungen von Melamin-Formaldehydharzen werden im ersten Schritt Melamin und Formaldehyd zunächst im wäßrigen alkalischen Medium zusammen mit einer Verbindung I und im zweiten Schritt im leicht sauren Medium zusammen mit mindestens einer Verbindung II kondensiert, wonach die wäßrige Lösung durch Zugabe einer Verbindung III alkalisch gestellt wird. Als Verbindung I kommen ein Alkalisulfit, ein Erdalkalisulfit, eine Aminosulfonsäure, eine Aminosäure, eine Hydroxycarbonsäure, ein Hydroxycarbonsäurelacton und ein Polyhydroxycarbonsäurelacton in Betracht, als Verbindung II eine Aminosäure, eine Carbonsäure, ein Hydroxycarbonsäure, ein Hydroxycarbonsäurelacton, eine Aminosulfonsäure einschließlich Sulfaminsäure, eine Polyhydroxycarbonsäure und ein Polyhydroxycarbonsäurelacton und als Verbindung III ein Alkalihydroxid, ein Erdalkalihydroxid, Ammoniumhydroxid, ein Monoamin, ein Polyamin, Monoethanolamin, Diethanolamin, Triethanolamin und basische Übergangsmetallverbindungen.

Die Molverhältnisse Melamin:Formaldehyd:Verbindung I sind 1:3,5-6:0,5-1 und die Melamin:Verbindung II sind 1:0,1-3. Nach einem weiteren, in der DE-A 3 248 586 beschriebenen Verfahren werden unmittelbar vor dem Ansäuern 0,1-2 Gew.-%, bezogen auf die Gesamtmenge an Melamin, Formaldehyd und Alkalisulfit, eines 3-5 Ringkohlenstoffe enthaltenden cyclischen Lactams oder ein durch eine Methyl- oder Aminogruppe substituierten Benzolsulfonsäureamids zugegeben. Das Molverhältnis Melamin:Formaldehyd:Alkalisulfit beträgt 0,9-1,1:2,9-3,1:0,9-1,1.

Bei den durch Einsatz von weniger als drei Mol Formaldehyd auf 1 Mol Melamin erhaltenen Harzen ist, wie in der US-A-4 444 945 berichtet wird, die Lagerstabilität nicht hoch, bei den nach den Beispielen der US-Patentschriften 4 430 469 und 4 501 839 hergestellten Lösungen werden nach der DE-A 3 248 586 keine lagerstabilen Lösungen erhalten, und die nach der DE-A 3 248 586 als Zusätze verwendeten cyclischen Lactame oder substituierten Benzolsulfonsäureamide sind relativ teuer.

Die Aufgabe der vorliegenden Erfindung ist es, neue sulfonierte Melamin-Formaldehyd-Kondensate herzustellen, die sich als Mittel zur Verbesserung des Fließverhaltens und der Festigkeitseigenschaften von anorganischen Baustoffen eignen, ohne die oben beschriebenen Nachteile aufzuweisen.

Es wurde nun gefunden, daß diese Anforderungen in hervorragender Weise erfüllt werden durch solche Sulfonsäure enthaltenden Melamin-Formaldehyd-Kondensationsprodukte, denen während der Herstellung Carbonsäureamide zugesetzt worden sind.

Gegenstand der Erfindung sind somit Sulfonsäuregruppen enthaltende durch Reaktion von Melamin, Formaldehyd und Alkalisulfit erhaltene Melamin-Formaldehyd-Kondensationsprodukte, welche dadurch gekennzeichnet sind, daß während der Reaktion zusätzlich aliphatische und/oder aromatische Carbonsäureamide zugesetzt werden.

Besonders bevorzugt sind dabei solche erfindungsgemäßen Produkte, bei deren Reaktion zur Herstellung Melamin, Formaldehyd und Alkalisulfit im Molverhältnis 1:2,5 bis 3,5:0,8 bis 1,5 eingesetzt werden.

Die vorteilhaften Effekte des erfindungegemäßen Produktes zeigen sich schon bei einer geringen Zugabe von Carbonsäureamiden. Bevorzugt wird das Carbonsäureamid in Mengen von 0,2 bis 8 Gew.-%, bezogen auf Melamin, eingesetzt. Geeignet als Carbonsäureamide sind sowohl aliphatische als auch aromatische Spezies.

Geeignete aliphatische Carbonsäureamide sind solche Verbindungen der allgemeinen Formel

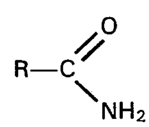

wobei R ein Wasserstoff oder ein Alkylrest mit 1 bis 7, bevorzugt 1-3, Kohlenstoffatomen bedeutet.

Geeignete aromatische Carbonsäureamide sind solche Verbindungen der allgemeinen Formel

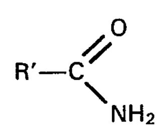 ,

wobei R' ein ein- oder mehrkerniger Aromat bedeutet. Beispielhaft für erfindungsgemäße Carbonsäureamide seien Formamid, Acetamid, Propionamid, Butyramid, Methacrylamid oder Benzamid genannt, wobei als aromatisches Carbonsäureamid Benzamid besonders geeignet ist.

Gegenstand der Erfindung sind auch Verfahren zur Herstellung der erfindungsgemäßen Sulfonsäuregruppen enthaltenden Melamin -Formaldehyd-Kondensationsprodukte.

Es wurde gefunden, daß man diese dadurch herstellen kann, indem man in wäßriger Lösung in der ersten Stufe Melamin, Formaldehyd und Alkalisulfit bei einer Temperatur von 80-100°C und einem pH-Wert

zwischen 7,5 und 9,5 und anschließend im sauren Medium bei einer Temperatur von 50-100°C und einem pH-Wert zwischen 3 und 6 kondensiert, wobei unmittelbar vor dem Ansäuern ein aliphatisches oder aromatisches Carbonsäureamid zugegeben wird, und anschließend die erhaltene Lösung alkalisch gestellt wird.

Besonders bevorzugt werden dabei Melamin, Formaldehyd und Alkalisulfit im Molverhältnis 1:2,5 bis 3,5:0,8 bis 1,5 und das Carbonsäureamid in Mengen von 0,2 bis 8 Gew.-%, bezogen auf Melamin, eingesetzt.

Das erfindungsgemäße Verfahren weist den Vorteil auf, daß durch Zugabe einer geringen Menge von leicht zugänglichen und preiswerten Substanzen, wie sie offenkettige Carbonsäureamide sind, die Herstellung von besonders geeigneten Sulfonsäuregruppen enthaltenden Melamin-Formaldehyd-Kondensaten möglich wird.

Ausgangsstoffe sind Melamin, Formaldehyd und ein Alkalisulfit, wobei das Alkalisulfit z.B. Natriumhydrogensulfit, Natriumdisulfit, Kaliumhydrogensulfit, Kaliumdisulfit oder Rongalit sein kann, und ein oder mehrere aliphatische und/oder aromatische Carbonsäureamide, wobei die aliphatischen Carbonsäureamide Verbindungen der allgemeinen Formel

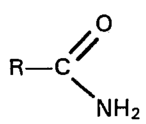

sind, wobei R ein Wasserstoff oder ein Alkylrest mit 1 bis 7, bevorzugt 1-3 Kohlenstoffatomen bedeutet und die aromatischen Carbonsäureamide Verbindungen der allgemeinen Formel

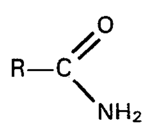

sind, wobei R ein ein- oder mehrkerniger Aromat bedeutet.

Benzamid ist dabei besonders bevorzugt.

Die Umsetzung wird in der ersten Stufe bei Temperaturen zwischen 80 und 100°C und in der zweiten Stufe bei Temperaturen zwischen 50 und 100°C vorgenommen.

Die Umsetzung wird normalerweise bei Atmosphärendruck durchgeführt. Für den Fachmann ist es naheliegend, daß sie auch bei erhöhtem Druck möglich ist.

Bei der Durchführung des erfindungsgemäßen Verfahrens setzt man auf ein Mol Melamin 2,5-3,5 Mol Formaldehyd und 0,8-1,5 Mol Alkalisulfit ein und führt die Kondensation im alkalischen Medium bei einer Temperatur von 80-100°C und einem pH-Wert zwischen 7,5 und 9,5, der z.B. durch wäßrige Natronlauge eingestellt werden kann durch, und die anschließende Kondensation im sauren Medium bei einer Temperatur von 50-100°C und einem pH-wert von 3 bis 6, der beispielsweise durch Schwefelsäure eingestellt wird, wobei unmittelbar vor dem Ansäuern 0,2-8 Gew.%, bezogen auf die Menge an Melamin, eines aliphatischen oder aromatischen Carbonsäureamid zugegeben werden. Nach der zweiten Stufe wird das Reaktionsgemisch durch Zusatz einer wäßrigen Lösung einer basischen Verbindung, z.B. Natronlauge, alkalisch gestellt.

Die erhaltene Lösung mit einem Feststoffgehalt von 30-50 Gew.-%, insbesondere 35-45 Gew.-%, kann ohne weitere Behandlung oder in getrockneter, z.B. sprühgetrockneter Form eingesetzt werden.

Es ist als ausgesprochen überraschend zu bezeichnen, daß gemäß der erfindungsgemäßen Umsetzung hochkonzentrierte, niederviskose und lagerstabile wäßrige Lösungen von Sulfonsäuregruppen enthaltenden Melamin-Formaldehyd-Kondensaten erhalten werden, da im Hinblick auf die deutsche Offenlegungsschrift 3 248 586, nach der cyclische Lactame und aromatische Sulfonsäureamide eingesetzt werden, nicht zu erwarten war, daß man durch Zusatz einer geringen Menge eines offenkettigen Carbonsäureamids eine niederviskose und hochkonzentrierte wäßrige Lösung eines Sulfonsäuregruppen enthaltenden Melamin-Formaldehyd-Kondensates mit guter Lagerstabilität und Verflüssigungswirkung bei anorganischen Baustoffen erhält.

Gegenstand der Erfindung ist somit auch die Verwendung der erfindungsgemäßen Melamin-Formaldehyd-Kondensationsprodukte als Zusatz zur Verbesserung des Fließverhaltens und der Festigkeitseigenschaften von anorganischen Baustoffen sowie deren Verwendung in Abmischungen mit Luftporenbildnern, Abbindebeschleunigern und Abbindeverzögerern.

Im folgenden wird die Erfindung beispielhaft erläutert.

Die in den folgenden Beispielen angegebenen Teile sind Gewichtsteile. Die angegebenen Viskositäten sind mit einem Brookfield-Viskosimeter gemessen worden.

*Beispiel 1*

In einem 1 l-Dreihalskolben mit Rührer, Rückflußkühler und Thermometer werden 292 Teile Wasser, 103,6 Teile Natriumdisulfid und 256 Teile 35%ige Formalinlösung gegeben. Diese Lösung wird nach Einstellung eines pH-Wertes von 7,5, Zugabe von 126 Teilen Melamin und Aufheizen auf 90°C 5 Stunden lang bei pH 9,0 und 90°C kondensiert. Nach Abkühlen auf 80°C und Ansäuern auf pH 6 mit 10%iger Schwefelsäure, wobei unmittelbar vor dem Ansäuren 0,5 Teile Formamid zugegeben worden sind, wird eine Stunde lang bei pH 6 und 80°C weiterkondensiert. Nach Abkühlen auf 40°C wird mit 25%iger Natronlauge ein pH-Wert von 9,5 eingestellt. Erhalten werden 785 Teile Lösung. Der Feststoffgehalt dieser Lösung beträgt ca. 40%, die Viskosität bei 20°C unmittelbar nach der Herstellung 33 mPa.s, nach 12-wöchiger Lagerung bei 50°C 340 mPa.s.

*Beispiele 2-4*

Stoffmengen, pH-Werte, Temperaturen und Zeiten sind wie bei Beispiel 1, nur werden unmittelbar vor dem Ansäuren statt 0,5 Teilen Formamid 0,87 Teile Butyramid (Beispiel 2), 0,85 Teile Methacrylamid (Beispiel 3) bzw. 1,2 Teile Benzamid (Beispiel 4) zugegeben.

| Beispiel Nr. | Viskosität/mPa.s bei 20°C nach Herstellung | nach Lagerung bei 50°C | Lagerzeit/ Wochen |
|---|---|---|---|
| 2 | 66 | 492 | 12 |
| 3 | 42 | 154 | 15 |
| 4 | 71 | 467 | 12 |

*Beispiel 5*

Ein Mörtel aus

100 Gewichtsteilen Portlandzement
500 Gewichtsteilen Baustellensand 0-8 mm
2,5 Gewichtsteilen des Kondensationsproduktes aus Beispiel 1 (40%ige wäßrige Lösung)
64 Gewichtsteilen Wasser wird angerührt.

Der Mörtel hat ein Ausbreitmaß von 21 cm über Schocktisch nach DIN 18 555. Aus ihm werden nach DIn 1164 prismenförmige Probenkörper der Abmessungen 4 × 4 × 16 cm hergestellt und geprüft:

| | 3 Tage | 7 Tage | 28 Tage |
|---|---|---|---|
| Dichte (kg/dm$^3$) | 2,25 | 2,3 | 2,3 |
| Biegezugfestigkeit (N/mm$^2$) | 3,59 | 4,48 | 4,79 |
| Druckfestigkeit (N/mm$^2$) | 18,46 | 24,08 | 31,70 |

*Beispiel 6*

Ein Mörtel aus

100 Gewichtsteilen Anhydrid AB 20
200 Gewichtsteilen Baustellensand 0-8 mm
0,95 Gewichtsteilen der sprühgetrockneten Lösung des Kondensationsproduktes aus Beispiel 1
0,95 Gewichtsteilen einer 28%igen wässrigen Natriumlaurylethersulfatlösung
31 Gewichtsteilen Wasser wird angerührt.

Aus ihm werden nach DIN 4208 prismenförmige Probenkörper der Abmessungen 4 × 4 × 16 cm hergestellt und geprüft:

| | 3 Tage | 7 Tage | 28 Tage |
|---|---|---|---|
| Dichte(kg/dm$^3$) | 2,1 | 2,1 | 2,1 |
| Biegezugfestigkeit (N/mm$^2$) | 5,11 | 6,03 | 6,48 |
| Druckfestigkeit (N/mm$^2$) | 26,85 | 33,38 | 34,90 |

Zum Vergleich wird ein Mörtel hergestellt aus:

100 Gewichtsteilen Anhydrit AB 230
200 Gewichtsteilen Baustellensand 0-8 mm
2 Gewichtsteilen des Handelsproduktes «Anhyplan-Kunststoffharz-Konzentrat» (BAYER AG, Leverkusen)
36,4 Gewichtsteilen Wasser.

Die Prüfung der aus ihm hergestellten Probenkörper nach DIN 4208 bringt folgende Ergebnisse:

| | 3 Tage | 7 Tage | 28 Tage |
|---|---|---|---|
| Dichte (kg/dm$^3$) | 2,1 | 2,1 | 2,1 |
| Biegezugfestigkeit (N/mm$^2$) | 3,32 | 6,63 | 7,10 |
| Druckfestigkeit (N/mm$^2$) | 16,30 | 24,82 | 27,93 |

**Patentansprüche**

1. Sulfonsäuregruppen enthaltende durch Reaktion von Melamin, Formaldehyd und Alkalisulfit erhaltene Melamin-Formaldehyd-Kondensationsprodukte, dadurch gekennzeichnet, daß während der Reaktion zusätzlich aliphatische und/oder aromatische Carbonsäureamide zugesetzt werden.

2. Sulfonsäuregruppen enthaltende Melamin-Formaldehyd-Kondensationsprodukte gemäß Anspruch 1, dadurch gekennzeichnet, daß Melamin, Formaldehyd und Alkalisulfit im Molverhältnis 1:2,5 bis 3,5:0,8 bis 1,5 eingesetzt werden.

3. Sulfonsäuregruppen enthaltende Melamin-Formaldehyd-Kondensationsprodukte gemäß einem der Ansprüche 1 oder 2, dadurch gekennzeichnet, daß das Carbonsäureamid in Mengen von 0,2 bis 8 Gew.-%, bezogen auf Melamin, eingesetzt wird.

4. Sulfonsäuregruppen enthaltende Melamin-Formaldehyd-Kondensationsprodukte gemäß einem oder mehreren der Ansprüche 1 bis 3, dadurch gekennzeichnet, daß das aliphatische Carbonsäureamid eine Verbindung der allgemeinen Formel

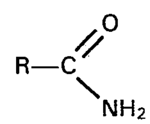

ist, wobei R Wasserstoff oder einen Alkylrest mit 1 bis 7, bevorzugt 1-3, Kohlenstoffatomen bedeutet.

5. Sulfonsäuregruppen enthaltende Melamin-Formaldehyd-Kondensationsprodukte gemäss einem oder mehreren der Ansprüchr 1 bis 3, dadurch gekennzeichnet, daß das aromatische Carbonsäureamid eine Verbindung der allgemeinen Formel

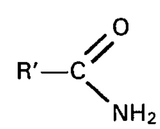

ist, wobei R' ein ein- oder mehrkerniger Aromat ist.

6. Sulfonsäuregruppen enthaltende Melamin-Formaldehyd-Kondensationsprodukte gemäß Anspruch 5, dadurch gekennzeichnet, daß das aromatische Carbonsäureamid Benzamid ist.

7. Verfahren zur Herstellung von Sulfonsäuregruppen enthaltenden Melamin-Formaldehyd-Kondensationsprodukten gemäß einem oder mehreren der Ansprüche 1 bis 6, dadurch gekennzeichnet, daß man in wäßriger Lösung in der ersten Stufe Melamin, Formaldehyd und Alkalisulfit bei einer Temperatur

von 80-100°C und einem pH-Wert zwischen 7,5 und 9,5 und anschließend im sauren Medium bei einer Temperatur von 50-100°C und einem pH-Wert zwischen 3 und 6 kondensiert, wobei ummittelbar vor dem Ansäuern ein aliphatisches oder aromatisches Carbonsäureamid zugegeben wird, und anschließend die erhaltene Lösung alkalisch gestellt wird.

8. Verfahren gemäß Anspruch 7, dadurch gekennzeichnet, daß Melamin, Formaldehyd und Alkalisulfit im Molverhältnis 1:2,5 bis 3,5:0,8 bis 1,5 und das Carbonsäureamid in Mengen von 0,2 bis 8 Gew.-%, bezogen auf Melamin, eingesetzt werden.

9. Verfahren gemäß einem der Ansprüche 7 oder 8, dadurch gekennzeichnet, daß das aliphatische Carbonsäureamid eine Verbindung der allgemeinen Formel

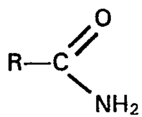

ist, wobei R Wasserstoff oder einen Alkylrest mit 1 bis 7, bevorzugt 1-3, Kohlenstoffatomen bedeutet.

10. Verfahren gemäß einem der Ansprüche 7 oder 8, dadurch gekennzeichnet, daß das aromatische Carbonsäureamid eine Verbindung der allgemeinen Formel

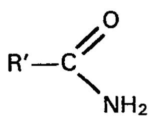

ist, wobei R' ein ein- oder mehrkerniger Aromat ist.

11. Verfahren gemäß Anspruch 10, dadurch gekennzeichnet, daß das aromatische Carbonsäureamid Benzamid ist.

12. Verwendung der Melamin-Formaldehyd-Kondensationsprodukte gemäß einem oder mehreren der Ansprüche 1 bis 11 als Zusatz zur Verbesserung des Fließverhaltens und der Festigkeitseigenschaften von anorganischen Baustoffen.

13. Verwendung der Melamin-Formaldehyd-Kondensationsprodukte gemäß einem oder mehreren der Ansprüche 1 bis 12 in Abmischungen mit Luftporenbildnern, Abbindebeschleunigern und Abbindeverzögerern.

## Claims

1. Melamine-formaldehyde condensation products which contain sulphonic acid groups and have been obtained by the reaction of melamine, formaldehyde and alkali sulphite, characterised in that aliphatic and/or aromatic carboxylic acid amides are additionally added during the reaction.

2. Melamine-formaldehyde condensation products containing sulphonic acid groups according to Claim 1, characterised in that melamine, formaldehyde and alkali sulphite are employed in a molar ratio 1:2.5 to 3.5:0.8 to 1.5.

3. Melamine-formaldehyde condensation products containing sulphonic acid groups according to one of Claims 1 or 2, characterised in that the carboxylic acid amine is used in quantities of 0.2 to 8% by weight, based on melamine.

4. Melamine-formaldehyde condensation products containing sulphonic acid groups according to one or more of Claims 1 to 3, characterised in that the aliphatic carboxylic acid amide is a compound of the general formula

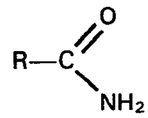

wherein

R denotes hydrogen or an alkyl radical with 1 to 7, preferably 1-3, carbon atoms.

5. Melamine-formaldehyde condensation products containing sulphonic acid groups according to one or more of Claims 1 to 3, characterised in that the aromatic carboxylic acid amide is a compound of the general formula

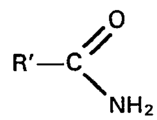

wherein

R' is a mono- or polynuclear aromatic radical.

6. Melamine-formaldehyde condensation products containing sulphonic acid groups according to Claim 5, characterised in that the aromatic carboxylic acid amine is benzamide.

7. Process for the production of melamine-formaldehyde condensation products containing sulphonic acid groups according to one or more of Claims 1 to 6, characterised in that melamine, formaldehyde and alkali sulphite are condensed in aqueous solution in the first stage at a temperature of 80-100°C and a pH value of between 7.5 and 9.5 and then in an acid medium at a temperature of 50-100°C and a pH value of between 3 and 6, an aliphatic or aromatic carboxylic acid amide being added immediately before the acidification, and the solution obtained is then rendered alkaline.

8. Process according to Claim 7, characterised in that melamine, formaldehyde and alkali sulphite are employed in a molar ratio of 1:2.5 to 3.5:0.8 to 1.5 and the carboxylic acid amide is employed in quantities of 0.2 to 8% by weight, based on melamine.

9. Process according to one of Claims 7 or 8, characterised in that the aliphatic carboxylic acid amide is a compound of the general formula

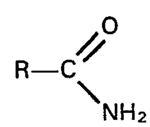

wherein

R denotes hydrogen or an alkyl radical with 1 to 7, preferably 1-3, carbon atoms.

10. Process according to one of Claims 7 or 8, characterised in that the aromatic carboxylic acid amide is a compound of the general formula

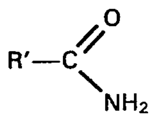

wherein

R' is a mono- or polynuclear aromatic radical.

11. Process according to Claim 10, characterised in that the aromatic carboxylic acid amide is benzamide.

12. Use of the melamine-formaldehyde condensation products according to one or more of Claims 1 to 11 as additives for improving the flow and strength properties of inorganic building materials.

13. Use of the melamine-formaldehyde condensation products according to one or more of Claims 1 to 12 in mixtures with air-entraining agents, setting accelerators and setting retarders.

**Revendications**

1. Produits de condensation mélamine-formaldéhyde contenant des groupes acide sulphonique, obtenus par réaction de mélamine, de formaldéhyde et d'un sulfite alcalin, caractérisés en ce que des amides d'acides carboxyliques aliphatiques et/ou aromatiques sont ajoutés en complément pendant la réaction.

2. Produits de condensation mélamine-formaldéhyde contenant des groupes acide sulfonique suivant la revendication 1, caractérisés en ce que la mélamine, le formaldéhyde et le sulfite alcalin sont utilisés dans la proportion molaire de 1:2,5 à 3,5:0,8 à 1,5.

3. Produits de condensation mélamine-formaldéhyde contenant des groupes acide sulfonique suivant l'une des revendications 1 ou 2, caractérisés en ce que l'amide d'acide carboxylique est utilisé en quantités de 0,2 à 8% en poids par rapport à la mélamine.

4. Produits de condensation mélamine-formaldéhyde contenant des groupes acide sulfonique suivant une ou plusieurs des revendications 1 à 3, caractérisés en ce que l'amide d'acide carboxylique aliphatique est un composé de formule générale

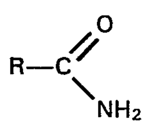

dans laquelle R désigne l'hydrogène ou un reste alkyle ayant 1 à 7, de préférence 1 à 3 atomes de carbone.

5. Produits de condensation mélamine-formaldéhyde contenant des groupes acide sulfonique suivant une ou plusieurs des revendications 1 à 3, caractérisés en ce que l'amide d'acide carboxylique aromatique est un composé de formule générale

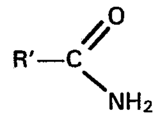

dans laquelle R' est un reste aromatique monocyclique ou polycyclique.

6. Produits de condensation mélamine-formaldéhyde contenant des groupes acide sulfonique suivant la revendication 5, caractérisés en ce que l'amide d'acide carboxylique aromatique est le benzamide.

7. Procédé de préparation de produit de condensation mélamine-formaldéhyde contenant des groupes acide sulfonique suivant une ou plusieurs des revendications 1 à 6, caractérisé en ce qu'on condense en solution aqueuse dans la première étape de la mélamine, du formaldéhyde et un sulfite alcalin à une température de 80 à 100°C et à un pH de valeur comprise entre 7,5 et 9,5 puis en milieu acide à une température de 50 à 100°C et à un pH de valeur comprise entre 3 et 6, et on ajoute alors immédiatement avant l'acidification un amide d'acide carboxylique aliphatique ou aromatique, puis on alcalinise la solution obtenue.

8. Procédé suivant la revendication 7, caractérisé en ce que la mélamine, le formaldéhyde et le sulfite alcalin sont utilisés dans une proportion molaire de 1:2,5 à 3,5:0,8 à 1,5 et l'amide d'acide carboxylique est utilisé en quantités de 0,2 à 8% en poids par rapport à la mélamine.

9. Procédé suivant l'une des revendications 7 ou 8, caractérisé en ce que l'amide d'acide carboxylique aliphatique est un composé de formule générale

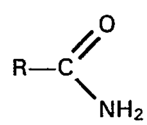

dans laquelle R est l'hydrogène ou un reste alkyle ayant 1 à 7, de préférence 1 à 3 atomes de carbone.

10. Procédé suivant l'une des revendications 7 ou 8, caractérisé en ce que l'amide d'acide carboxylique aromatique est un composé de formule générale

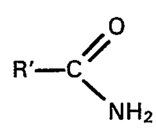

dans laquelle R' est un reste aromatique monocyclique ou polycyclique.

11. Procédé suivant la revendication 10, caractérisé en ce que l'amide d'acide carboxylique aromatique est le benzamide.

12. Utilisation des produits de condensation mélamine-formaldéhyde suivant une ou plusieurs des revendications 1 à 11 comme additif pour améliorer l'écoulement et les propriétés de résistance de matériaux inorganiques de construction.

13. Utilisation des produits de condensation mélamine-formaldéhyde suivant une ou plusieurs des revendications 1 à 12 dans des mélanges avec des agents porogènes, des accélérateurs de prise et des retardateurs de prise.